# EUROPÄISCHE PATENTSCHRIFT

(11) **EP 3 585 557 B1**
(45) Veröffentlichungstag und Bekanntmachung des Hinweises auf die Patenterteilung: **15.05.2024**
(21) Anmeldenummer: 18719748.8
(22) Anmeldetag: 14.02.2018
(51) Int. Cl.: B23P 15/10, B23K 26/0622, B23K 26/06, B23K 26/364, F16F 9/32, B23K 101/00

(54) **PRODUKTIONSVERFAHREN FÜR EINEN DÄMPFER, PRODUKTIONSANLAGE ZUR PRODUKTION EINES DÄMPFERS**
PRODUCTION METHOD FOR A DAMPER, PRODUCTION PLANT FOR PRODUCING A DAMPER
PROCÉDÉ DE PRODUCTION POUR UN AMORTISSEUR, INSTALLATION DE PRODUCTION POUR LA PRODUCTION D'UN AMORTISSEUR

(30) Priorität: 24.02.2017 DE 102017001785
(43) Veröffentlichungstag der Anmeldung: 01.01.2020
(73) Patentinhaber: STABILUS GmbH, 56070 Koblenz (DE)
(72) Erfinder: LÖHKEN, Lars, 53545 Linz am Rhein (DE); MÜLLER, Markus, 56072 Koblenz (DE); PIROTH, Raphael, 56077 Koblenz (DE); PROBST, Ulrich, 56204 Hillscheid (DE)
(74) Vertreter: Bernsmann, Falk
(86) Internationale Anmeldenummer: PCT/EP2018/000060
(87) Internationale Veröffentlichungsnummer: WO 2018/153542

(56) Entgegenhaltungen:
- WO-A1-2016/027808
- CN-B- 103 527 027
- DE-A1- 10 312 164
- DE-A1-102014 214 920
- DE-C2- 10 038 971
- DE-T5-112009 000 138
- JP-A- 2015 086 766
- US-A1- 2015 128 894

## Beschreibung

Die Erfindung betrifft ein Produktionsverfahren für einen Dämpfer.

Die Erfindung betrifft ferner eine Produktionsanlage zur Produktion eines Dämpfers. Beispielsweise in Klappen, Türen und Fächern werden zur Dämpfung der Öffnungs- oder Schließgeschwindigkeit häufig Bewegungsdämpfer eingesetzt, z.B. ölhydraulische Dämpfer. Fertigungs- und bauteilbedingt unterliegen diese Dämpfer und deren geschwindigkeitsabhängige Dämpfkraft gewissen Toleranzen. In bestimmten Anwendungen ist es gewünscht, diese Krafttoleranzen so gering wie möglich halten, was mit Dämpfern aus dem Stand der Technik nicht immer erreicht wird.

Die vorgenannten Dämpfer werden häufig mit Düsenkolben ausgerüstet, die mit radial oder axial zu einer Dämpferlängsachse angeordneten Nuten oder Düsen bestückt sind. Durch den

### BESTATIGUNGSKOPIE

von den Düsen definierten Strömungsquerschnitt, strömt beim Bewegen des Düsenkolbens entlang einer Hubachse ein Dämpfungsfluid, beispielsweise ein Hydrauliköl oder ein Dämpfungsgas. Dabei wirken die Düsen als Engstelle oder als Drosselstelle, die einen Strömungswiderstand für das Dämpfungsfluid maßgeblich bestimmt. Neben weiteren notwendigen Komponenten des Dämpfers wie Druckrohr, Kolbenstange, Führungs- und Dichtungspaket, Anschlüssen und dem Dämpfungsfluid ist der Düsenkolben und insbesondere die Ausgestaltung der Düsen maßgeblich für die Abstimmung der, insbesondere geschwindigkeitsabhängigen, Dämpfkraft und die daraus resultierenden Krafttoleranzen verantwortlich.

Ein entscheidender Nachteil von Axialdüsenkolben ist die Schmutzempfindlichkeit, hinsichtlich der Verschmutzung und Verstopfung ihrer Düsen. Je nach Düsengröße können Abrieb im Gerät oder Verschmutzungspartikel, die bei der Fertigung in das Gerät gelangen, die Düse verstopfen und zum Anstieg der Dämpfkräfte führen. Außerdem sind Abstimmungen mit hohen Dämpfkräften schwieriger zu realisieren, da die Axialdüsen hauptsächlich spanend in die Kolben eingefügt werden und besonders kleine Bohrwerkzeuge eine äußerst kurze Standzeit haben.

Im Vergleich dazu haben Radialdüsenkolben, die im Sinterverfahren hergestellt werden, den Vorteil, dass die Düse mit dem Sinterwerkzeug gefertigt wird und somit auch kleinere Querschnitte möglich sind. Das ermöglicht zwar, das eben beschriebene Problem, der Abstimmungen mit höheren Dämpfkräften, zu lösen, allerdings ergeben sich daraus weitere Nachteile. Grundsätzlich haben Sinterwerkstoffe im Vergleich zu einem Vollmaterial eine gewisse Porosität, die die Dämpfkrafttoleranz aufweicht, da je nach Porosität mehr oder weniger Fluid durch den Werkstoff hindurchdringen kann und somit der Strömungswiderstand verringert wird. Weiterhin ist die Oberflächenbeschaffenheit, die sich ebenso auf die Dämpfkraft auswirkt, bei Sinterwerkstoffen weniger gut zu kontrollieren und stark von der Nachbehandlung der Düsenkolben (z.B. Kugelstrahlen oder Gleitschleifen) und deren Prozessschwankungen abhängig.

Des Weiteren weisen Sinterwerkzeuge und Werkzeuge zur spanenden Bearbeitung bei ihrer Benutzung Verschleiß auf. Das führt dazu, dass sich bei Abnutzung des Werkzeuges die Form der eingebrachten Düse und damit insbesondere der für die Strömungsimpedanz und somit für die Dämpfkraft relevante Querschnitt im Laufe einer Produktionsserie von einem produzierten Düsenkolben zum nächsten sukzessive verändert. Dadurch leidet die Zuverlässigkeit der produzierten Dämpfer bezüglich der Präzision der eingestellten Dämpfkraft.

Die Druckschrift DE 100 38 971 C2 offenbart ein Produktionsverfahren für einen Dämpfer mit zumindest folgenden Schritten:
a. Herstellen eines Kolbenrohlings und
b. Einbringen zumindest einer Ausnehmung in den Kolbenrohling durch Lasern, wobei die Ausnehmung bei Anordnung des Düsenkolbens in dem Dämpfungsraum eine Düse für das Dämpfungsfluid zur Anpassung des Strömungswiderstandes für das Dämpfungsfluid zwischen der ersten Fluidkammer und der zweiten Fluidkammer definiert,
c. Einbauen des Düsenkolbens in einen Dämpfungsraum des Dämpfers, wobei der Kolben entlang einer Längsachse des Dämpfungsraums geführt ist und den Dämpfungsraum in eine erste Fluidkammer und eine zweite Fluidkammer unterteilt.

Die Druckschrift DE 100 38 971 C2 beschreibt ein Verfahren zur Einstellung der Drosselwirkung eines Ventils, wobei mittels der Wärmeentwicklung eines Laserstrahls ein Abbrennen von Volumenteilen an dem Ventil erfolgt. Nachteilig an dem Verfahren ist, dass es durch die Wärmeeinwirkung zu Eigenspannungen und unkontrollierten Materialverformungen, insbesondere zu Materialaufwerfungen, kommen kann, die die Drosselwirkung verändern können und/oder durch aufwendige Nachbearbeitung entfernt werden müssen. Insbesondere nicht relaxierte Eigenspannungen können auch weit nach der Laserbearbeitung noch zu unkontrollierbaren Materialveränderungen bis hin zu Rissbildungen und Materialversagen führen.

Die Druckschrift DE 2005 007 010 B3 beschreibt ein weiteres Verfahren zur Einstellung der Drosselwirkung eines Ventils. Hierbei wird mittels der Wärmeentwicklung eines Laserstrahls eine Gestaltveränderung einer Ventilscheide zur Einstellung ihrer Federvorspannung induziert. Auch hier ergeben sich die genannten Nachteile und Risiken einer thermischen Bearbeitung.

Daraus ergibt sich die technische Aufgabe, einen schnell, kosteneffizient und einfach herzustellenden Dämpfer mit einer gegenüber dem Stand der Technik erhöhten Zuverlässigkeit sowie ein Produktionsverfahren und eine Produktionsanlage für solche Dämpfer zu schaffen.

Die Aufgabe wird von einem Produktionsverfahren gemäß Anspruch 1 für einen Dämpfer, und von einer Produktionsanlage gemäß Anspruch 4 zur Produktion eines Dämpfers gelöst. Vorteilhafte Ausgestaltungen ergeben sich aus den Unteransprüchen.

Eine eine Düse definierende Ausnehmung erlaubt es dem Dämpfungsfluid, im Betrieb des Dämpfers zwischen der ersten und zweiten Fluidkammer hin- und herzuströmen, sodass sich der Kolben in dem Dämpfungsraum bewegen kann. Der Strömungswiderstand für das Dämpfungsfluid hängt maßgeblich von der Düse als Engstelle im Strömungsweg ab und bestimmt dabei die zur Bewegung des Kolbens notwendige Kraft und somit die Dämpfkraft des Dämpfers.

Der Kolbenrohling wird vorteilhafterweise durch spanendes Bearbeiten, beispielsweise durch Drehen, Fräsen, Bohren und/oder Schleifen, hergestellt, da hierdurch eine Vielzahl möglicher Kolbengeometrien auf einfache, kostengünstige und schnelle Weise und insbesondere mit kontrollierbaren chemischen und/oder mechanischen Oberflächeneigenschaften hergestellt werden kann. Dazu kann erfindungsgemäß vorzugsweise unmittelbar nach dem Herstellen des Kolbenrohlings ein Säuberungsschritt, Polierschritt und/oder Beschichtungsschritt des Kolbenrohlings, beispielsweise zur Entfernung von Spänen oder chemischen Rückstanden erfolgen. Um einen derart kontrollierten Zustand des Kolbenrohlings unabhängig von den Lagerbedingungen zu erhalten, kann ferner eine Anzahl von Kolben in einem Verpackungsmittel gelagert werden und aus diesem vorzugsweise erst unmittelbar vor der Weiterverarbeitung des Kolbenrohlings zu einem Düsenkolben und/oder unter kontrollierten Umgebungsbedingungen entnommen werden.

Zur Steigerung der Produktionsflexibilität und Reduzierung des Aufwandes der Lagerhaltung kann ein Kolbenrohling für verschiedene Bautypen standardisiert hergestellt werden, indem hinreichend viel Material im Kolbenrohling belassen wird, um durch eine Nachbearbeitung mit z.B. einem Ultrakurzpulslaserschritt aus dem standardisierten Kolbenrohling jeden bautypenspezifischen Düsenkolben mit einer entsprechenden bautypenspezifischen Düsengeometrie zu fertigen. Vorzugsweise entspricht der Kolbenrohling allen daraus fertigbaren Düsenkolben bis auf die nachzuarbeitenden Bereiche des Kolbenrohlings, welche die Düse des Düsenkolbens definieren. Dadurch wird durch das relativ zu beispielsweise spanenden Verfahren teure und langsame Ultrakurzpulslasern auf ein minimales Materialvolumen beschränkt. Gemäß einer erfindungsgemäßen Leitlinie werden alle Strukturen des Düsenkolbens durch möglichst kosteneffiziente Vorverfahren gefertigt, welche reduzierte Ansprüche an die Fertigungstoleranz haben und/oder standardisierbar sind und/oder durch Ultrakurzpulslasern nachbearbeitet werden können.

Das erfindungsgemäße Verfahren hat insbesondere den Vorteil, dass der Kolbenrohling kosteneffizient, beispielsweise aus einem Vollmaterial, gefertigt werden kann. Der Erfindung unterliegt die Erkenntnis, dass der vordergründige Nachteil, den Düsenkolben nicht wie fachüblich in einem einzigen Produktionsschritt, insbesondere einem Sinterverfahren, sondern mit einem erfindungsgemäßen Zwei- oder Mehrschrittverfahren herzustellen, durch die höhere Produktionseffizienz und Flexibilität des Gesamtprozesses, insbesondere von Sequenzen von Losen von Dämpfern verschiedener Baureihen, und ihre höhere Qualität und den geringeren Ausschuss mehr als wettgemacht werden kann.

Im Gegensatz zu Span- oder Sinterwerkzeugen unterliegt ein Laser keinem das Bearbeitungsergebnis direkt beeinflussenden Werkzeugverschleiß, woraus sich eine hohe Reproduzierbarkeit des Bearbeitungsergebnisses ergibt. Weiterhin können mit dem gleichen Laser im Gegensatz zu einem Sinterwerkzeug auf einfache Weise, beispielsweise geometrisch, unterschiedliche Ausnehmungen oder sogar Hinterschneidungen hergestellt werden. Dadurch ist eine flexiblere Produktion, insbesondere für Kleinserien, ohne Mehrkosten möglich.

Durch Ultrakurzpulslasern ergibt sich der zusätzliche Vorteil, dass ein Materialabtrag ohne Erwärmung der Umgebung des Abtragsbereichs möglich ist. Dadurch werden Verformungen, Eigenspannungen und/oder Aufwerfungen des Kolbenmaterials vermieden, wodurch eine präzisere und reproduzierbarere Bearbeitung als mit fachüblich angewandten Verfahren möglich ist. Dies erlaubt die kosteneffiziente und zuverlässige Fertigung von Düsen mit einer besonders hohen und gleichbleibenden Präzision, beispielsweise mit einer Größentoleranz gemäß ISO-Toleranzklasse IT5 bis IT6. Eine präzise und reproduzierbar gefertigte Düse stellt einen präzise und reproduzierbar einstellbaren Strömungswiderstand für das Dämpfungsfluid und somit ein zuverlässig einstellbares Dämpfungsverhalten des Dämpfers sicher.

Das Einbringen durch Ultrakurzpulslasern kann bei einer lokalen Kolbentemperatur in einem Abtragsbereich des Düsenkolbens erfolgen, die oberhalb einer Sublimationstemperatur eines Kolbengrundmaterials liegt. Das heißt, in dem Abtragbereich, in dem Material abgetragen werden soll, wird das Kolbengrundmaterial lokal und zeitlich begrenzt durch das Ultrakurzpulslasern so stark aufgeheizt, dass es aus einem festen Zustand in die Gasphase oder ein Aerosol übergeht. Dadurch entsteht in dem Abtragsbereich eine Ausnehmung aus dem Kolbengrundmaterial. Erfindungsgemäß kann das Abtragen unter vorzugsweise durchgängigem Absaugen erfolgen, um die Abführung des abgetragenen Materials zu bewirken und eine unerwünschte oder unkontrollierte Ablagerung von abgetragenen Material auf dem Kolben zu vermeiden.

Das Einbringen durch Ultrakurzpulslasern kann bei einer regionalen Kolbentemperatur in einem an einen Abtragsbereich des Düsenkolbens angrenzenden Kolbenbereich erfolgen, die unterhalb einer Verformungstemperatur eines Kolbengrundmaterials liegt und bevorzugt einer Umgebungstemperatur einer Umgebung des Düsenkolbens entspricht. Durch geeignete Wahl der Ultrakurzpulslaserparameter verbleibt die regionale Temperatur des Düsenkolbens außerhalb des Abtragbereichs unterhalb einer Verformungstemperatur, insbesondere einer Anschmelztemperatur oder Schmelztemperatur des Kolbengrundmaterials. Dadurch entstehen vorteilhafterweise keine Eigenspannungen, Verformungen oder Aufwerfungen des Kolbenmaterials. Besonders vorteilhaft ist es dabei, wenn die regionale Kolbentemperatur die Umgebungstemperatur des Kolbens nicht überschreitet, sodass durch die Bearbeitung keine Erwärmung der Umgebung auftritt, die den Produktionsprozess stören könnte.

Als besonders vorteilhaft für ein präzises und möglichst schnelles Einbringen einer Ausnehmung, beispielsweise in ein metallisches Vollmaterial wie Aluminium, haben sich folgende Ultrakurzpulslaserparameter erwiesen:
a. eine Laserwellenlänge im nahen infraroten Spektralbereich zwischen 0,8 µm und 3,0 µm, bevorzugt im IR-A-Bereich zwischen 0,8 µm und 1,4 µm, besonders bevorzugt bei etwa 1,0 µm;
b. eine Pulsfrequenz zwischen 200 kHz und 2000 kHz, bevorzugt zwischen 500 kHz und 1000 kHz, besonders bevorzugt bei etwa 800 kHz;
c. eine Pulsdauer von unter 100 ps, bevorzugt unter 10 ps, besonders bevorzugt etwa 0,8 ps;
d. eine Pulsenergie von unter 500 mJ, bevorzugt unter 200 mJ und/oder
e. ein Laserspotdurchmesser von zwischen 25 µm und 500 µm, bevorzugt zwischen 50 µm und 150 µm, besonders bevorzugt etwa 75 µm.

Das Einbringen durch Ultrakurzpulslasern kann in einer kontrollierten Atmosphäre, insbesondere in einem Schutzgas- oder Inertgas oder einer Schutzgas- und/oder Inertgasmischung, erfolgen. Durch eine kontrollierte Atmosphäre lässt sich beispielsweise die Ausbildung einer Oxidschicht an der Oberfläche des Düsenkolbens steuern, um zum Beispiel Reibkräfte zwischen dem Düsenkolben und dem Dämpfungsfluid oder ein Verschleißverhalten des Düsenkolbens im Bereich der Ausnehmung einzustellen.

Das Verfahren kann ein Erheben von thermischen Eigenschaften des Düsenkolbens und/oder einer thermischen Ankopplung des Düsenkolbens an eine Umgebung des Düsenkolbens einschließen. Beispielsweise eine Verformungstemperatur, Wärmekapazität und/oder Wärmeleitfähigkeit des Kolbengrundmaterials und/oder eine Wärmeableitung von dem Düsenkolben in dessen Umgebung können bei bekannten Materialien und Geometrien aus entsprechenden Tabellenwerken und/oder Datenbanken erhoben werden. Aus den thermischen Eigenschaften und der thermischen Ankopplung kann, beispielsweise mit einem Computerprogramm ermittelt werden, welcher Energiefluss beim Einbringen der Ausnehmung auf den Düsenkolben einwirken darf, ohne eine zu starke Erhöhung der regionalen Kolbentemperatur zu bewirken. Aus dem Energiefluss können wiederum geeignete Laserparameter ermittelt werden, mit denen ein effizienter Materialabtrag im Bereich der Ausnehmung ohne Überschreitung des maximalen erwünschten Energieflusses erreicht wird.

Folglich kann das Verfahren ein Auswählen von Laserparametern anhand von thermischen Eigenschaften des Düsenkolbens und/oder einer thermischen Ankopplung des Düsenkolbens an eine Umgebung des Düsenkolbens umfassen, um wie oben erläutert, geeignete Laserparameter für einen effizienten Materialabtrag ohne zu starke Aufheizung des Kolbenmaterials zu erzielen.

Das Verfahren kann ein Anbringen zumindest eines an die Ausnehmung angrenzenden Deckelements umfassen. Das Deckelement kann die Ausnehmung zumindest einseitig begrenzen, sodass das im Bereich der Ausnehmung zwischen Düsenkolben und Deckelement liegende Volumen eine Düse definiert. Vorteilhaft daran ist, dass die Ausbringung nicht wie ein Tunnel in den Düsenkolben eingebracht werden muss, sondern wie ein Graben an einer Oberfläche des Düsenkolbens eingebracht und dann durch das Deckelement einseitig verschlossen werden kann. Dadurch ist die Ausnehmung während des Einbringens leichter zugänglich und kann einfacher, schneller und kostengünstiger eingebracht werden. Weiterhin kann durch Deckelemente mit unterschiedlicher Form und/oder Oberflächenbeschaffenheit der Strömungswiderstand für das durch die Düse strömende Dämpfungsfluid und somit die Dämpfkraft des Dämpfers eingestellt werden. Das Anbringen eines Deckelements steigert also die Flexibilität der Fertigung.

Das Verfahren umfasst erfindungsgemäß ein Prüfen des Düsenkolbens bezüglicher einer Kraft-Geschwindigkeits-Charakteristik eines den Düsenkolben enthaltenen Dämpfers.

Alternativ oder ergänzend kann auch die Lage, Form, Größe und/oder Oberflächenbeschaffenheit der Ausnehmung, beispielsweise mittels Bilderkennung, geprüft werden. Um sicherzustellen, dass ein Dämpfer mit dem Düsenkolben die gewünschte Dämpfkraft abhängig von der Bewegungsgeschwindigkeit des Düsenkolbens relativ zum Dämpfungsfluid zeigt, kann der Düsenkolben in einem Dämpfer, insbesondere in dem Dämpfer, für den der Düsenkolben bestimmt ist, montiert werden. Dann kann an dem montierten Dämpfer dessen Kraft-Geschwindigkeits-Charakteristik gemessen werden. Die Messung im montierten Dämpfer eignet sich besonders, wenn ein hoher Anteil der gefertigten Düsenkolben, insbesondere jeder gefertigte Düsenkolben, geprüft werden soll, da hierdurch ein zusätzlicher Montageschritt in einem Prüfaufbau entfällt. Dadurch ist mit einem hohen Prüfanteil eine hohe Zuverlässigkeit der Dämpfer, insbesondere im Sinne einer geringen Streuung des Dämpfungsverhaltens, bei gleichzeitig geringen Fertigungskosten möglich.

Das Verfahren umfasst erfinndungsgemäß ein Steuern des Einbringens der zumindest einer Ausnehmung anhand eines Ergebnisses eines Prüfens eines Düsenkolbens. Durch das Steuern kann ein geschlossener Regelkreislauf erreicht werden, bei dem mögliche Abweichungen eines geprüften Düsenkolbens von seinen Spezifikationen für nachfolgend produzierte Düsenkolben mit einer Anpassung des Einbringens und/oder Herstellens korrigiert werden können. Wenn beispielsweise in der Kraft-Geschwindigkeits-Charakteristik eines Dämpfers mit einem Düsenkolben eine zu hohe Kraft auftritt, kann die Ultrakurzpulslaserbearbeitung, beispielsweise durch eine längere Bearbeitungszeit, auf einen höheren Materialabtrag zur Fertigung einer größeren Ausnehmung eingestellt werden. Dadurch werden nachfolgende Düsenkolben mit einer größeren Düse gefertigt, sodass der Strömungswiderstand für das die Düse durchströmende Dämpfungsfluid verringert wird, was zu einer geringeren Dämpfkraft des Dämpfers führt. Indem die Fertigung bei Abweichungen der gefertigten Düsenkolben von ihren Spezifikationen durch einen geschlossenen Regelkreislauf angepasst wird, kann eine sehr geringe Streuung der Dämpfungseigenschaften von mit den gefertigten Düsenkolben ausgestatteten Dämpfern erreicht werden.

Das Verfahren kann ein Dokumentieren eines Ergebnisses eines Prüfens des Düsenkolbens umfassen. Durch das Dokumentieren, insbesondere in Verbindung mit Typen-, Produktions- und/oder Materialdaten, kann insbesondere bei späteren Funktionsproblemen eines Dämpfers nachvollzogen werden, worauf diese zurückzuführen sind. Dadurch können mögliche Probleme in der Fertigung und/oder Rohstoffauswahl erkannt und korrigiert werden, um die Zuverlässigkeit der gefertigten Düsenkolben und damit produzierten Dämpfer zu steigern. Bevorzugt erfolgt das Dokumentieren zumindest teilweise direkt auf dem gefertigten Düsenkolben, beispielsweise in Form eines alphanumerischen Codes, eines Barcodes und/oder QR-Codes. Dadurch können beispielsweise auch sonst nur schwer voneinander zu unterscheidende Düsenkolben zuverlässig erkannt werden und die aufgebrachte Information ist immer zusammen mit dem Düsenkolben verfügbar.

Das Verfahren kann ein Beschriften des Düsenkolbens und/oder Dämpfers umfassen, wodurch vorteilhafterweise Informationen zu einem Düsenkolben und/oder Dämpfer direkt auf dem Bauteil dokumentiert werden können. Das Beschriften erfolgt bevorzugt durch Ultrakurzpulslasern, insbesondere im gleichen Prozessschritt wie das Einbringen der Ausnehmung. Dadurch wird eine besonders effiziente Fertigung ermöglicht.

Das Verfahren kann ein Härten einer Oberfläche des Düsenkolbens umfassen. Durch ein Härten der Oberfläche kann der Verschleiß des Düsenkolbens, insbesondere in stark beanspruchten Bereichen wie den Düsen oder Kontaktflächen zum Dämpfungsraum, reduziert werden. In der Folge wird eine höhere Zuverlässigkeit des Düsenkolbens und Dämpfers erreicht. Das Härten erfolgt bevorzugt durch Ultrakurzpulslasern, insbesondere im gleichen Prozessschritt wie das Einbringen der Ausnehmung. Dadurch wird eine besonders effiziente Fertigung ermöglicht. Zum Härten sind in der Regel je nach Kolbenmaterial andere Laserparameter erforderlich als zum Einbringen der Ausnehmung, da beispielsweise ein größerflächiger Energieeintrag notwendig ist.

Das Verfahren kann ein Beschichten einer Oberfläche des Düsenkolbens umfassen. Insbesondere das Aufbringen einer Verschleißschutzschicht kann, beispielsweise in stark beanspruchten Bereichen wie den Düsen oder Kontaktflächen zum Dämpfungsraum, die Langlebigkeit und Zuverlässigkeit des Düsenkolbens und somit des Dämpfers erhöhen.

Das erfindungsgemäße Produktionsverfahren für einen Dämpfer umfasst die Merkmale des Anspruchs 1.

Wird der Düsenkolben wie beschrieben eingebaut, entfaltet er in dem und für den Dämpfer die die erfindungsgemäßen Vorteile. Das Einbauen kann mit fachüblichen Verfahren erfolgen, sodass sich das erfindungsgemäße Verfahren nahtlos und kosteneffizient in bestehende Fertigungsverfahren einfügen lässt.

Ein Düsenkolben ist zur Anordnung in einem ein Dämpfungsfluid enthaltenden Dämpfungsraum eines Dämpfers vorgesehen, wobei der Düsenkolben den Dämpfungsraum in eine erste Fluidkammer und eine zweite Fluidkammer unterteilt, wobei der Düsenkolben zumindest einer Ausnehmung aufweist, wobei die Ausnehmung eine Düse für das Dämpfungsfluid zur Anpassung des Strömungswiderstandes für das Dämpfungsfluid zwischen der ersten Fluidkammer und der zweiten Fluidkammer definiert.

Der Düsenkolben ist durch Ultrakurzpulslasern der Ausnehmung, insbesondere mit einem erfindungsgemäßen Verfahren, aus einem Kolbenrohling erhältlich. Der Düsenkolben ist nicht Teil der vorliegenden Erfindung.

Der Kolben kann aus einem Sintermaterial oder aus einem Vollmaterial bestehen. Vorzugsweise besteht der Kolben aus einem Vollmaterial. Ein Kolben aus einem Vollmaterial ist kontrollierbarer und mit geringerer Fertigungstoleranz herzustellen als beispielsweise ein poröses Material aus einem Sinterprozess und ist gleichzeitig weniger gefährdet, dass sich Partikel lösen, welche Engstellen wie insbesondere in einer Düsen verstopfen könnten. Dies erhöht die Zuverlässigkeit eines Dämpfers mit einem erfindungsgemäßen Düsenkolben. Ein Vorteil der erfindungsgemäß freier wählbaren Materialeigenschaften des Düsenkolbens ist, dass er besser optimierbar ist als ein durch ein Sinterfahren hergestellter Düsenkolben aus demselben Stoff, weil weitere Parameter einstellbar sind. Beispielsweise kann der Parameter Wärmeleitfähigkeit bei einem Vollmaterial höher als bei einem Sintermaterial sein, was für eine effizientere Wärmeabführung der sich im Dämpfbetrieb durch Reibung stark erhitzenden Abschnitte des Düsenkolbens zur Folge hat. Die Optimierung kann beispielsweise in einer freieren Einstellbarkeit von Parametern wie Wärmeleitfähigkeit, mechanischer Stabilität, Formstabilität, Abnutzung insbesondere der durch Fluidstrom und/oder mechanisch besonders belasteten Abschnitte wie der Düsen liegen.

Ein durch Ultrakurzpulslasern der Ausnehmung erhältlicher Düsenkolben zeichnet sich insbesondere dadurch aus, dass der Düsenkolben im Gegensatz zu fachüblichen Methoden zur Einbringung einer Ausnehmung in einem Bereich der Ausnehmung frei von thermisch bedingten Verformungen, Eigenspannungen und/oder Materialaufwerfungen ist. Daraus ergeben sich die zum erfindungsgemäßen Verfahren genannten Vorteile.

Der Düsenkolben kann eine Kolbenlängsachse aufweisen, die zur Anordnung parallel zu einer Längsachse des Dämpfungsraumes vorgesehen ist. Die Ausnehmung kann im Wesentlichen eine Radialdüse in einer Radialrichtung orthogonal zur Kolbenlängsachse definieren. Radialdüsen haben den Vorteil, dass sich kleinere Strömungsquerschnitte und somit höhere Strömungswiderstände und Dämpfkräfte realisieren lassen als mit Axialdüsen. Dadurch eröffnen sich zusätzliche Anwendungsbereiche bei hohen Dämpferbelastungen, sodass Dämpfer mit Radialdüsenkolben flexibler eingesetzt werden können. Besonders vorteilhaft befindet sich eine Radialdüse in einem, bevorzugt ringförmig, um die Kolbenlängsachse verlaufenden Steg. Durch die Anordnung in einem solchen Steg ist nur ein geringer Materialabtrag zum Einbringen der Düse notwendig, sodass sie schnell und kostengünstig produziert werden kann.

Die Ausnehmung kann eine Axialdüse entlang der Kolbenlängsachse definieren. Durch eine Axialdüse kann das Dämpfungsfluid den Düsenkolben im Wesentlichen in gerader Linie durchströmen. Durch die einfachere Flussgeometrie als bei einer Radialdüse kann das Strömungsverhalten und somit das Dämpfverhalten einfacher vorausberechnet werden, sodass weniger aufwendige Tests zur Entwicklung neuer Dämpfer notwendig sind. Außerdem benötigt ein Axialdüsenkolben keine zusätzlichen Umlenkelemente, um den Dämpfungsfluidstrom aus einer Axial- in eine Radialrichtung und zurück zu lenken, sodass ein Axialdüsenkolben besonders einfach und kostengünstig konstruiert sein kann.

Der Düsenkolben kann, insbesondere in einem an die Ausnehmung angrenzenden Kolbenbereich ein die Ausnehmung zumindest einseitig begrenzendes Deckelement umfassen. Das Deckelement kann beispielsweise als Scheibe, insbesondere Lochscheibe, ausgestaltet sein und/oder an dem Düsenkolben, insbesondere lösbar, befestigt sein. Das Deckelement kann zum Beispiel an den Düsenkolben geklebt, geschweißt, geschraubt, genietet und/oder gepresst sein. Das Deckelement erlaubt zum einen in der Fertigung die beim erfindungsgemäßen Verfahren genannten Vorteile. Zum anderen kann ein lösbar befestigtes Deckelement, beispielsweise zur Wartung und/oder Reinigung des Düsenkolbens vom Düsenkolben gelöst werden, damit die von der Ausnehmung definierte Düse für Reinigungs- und/oder Wartungsarbeiten leicht zugänglich ist. Insbesondere kann das Deckelement so mit dem Düsenkolben verbunden sein, dass es bei einem Dämpfungsvorgang eines mit dem Düsenkolben ausgestatteten Dämpfers durch die Bewegung des Dämpfungsfluides zumindest zeitweise von dem Dämpfungskolben entfernt wird. Dadurch können mögliche Verunreinigungen von dem Dämpfungsfluid aus der Düse gespült werden, sodass die Düse im Betrieb des Dämpfers automatisch gereinigt wird. Durch eine einfache, insbesondere automatische, Reinigung und/oder eine einfache Wartung steigen die Lebensdauer und Zuverlässigkeit des Düsenkolbens und des Dämpfers.

Der Düsenkolben kann, insbesondere in einem an die Ausnehmung angrenzenden Kolbenbereich, frei von Eigenspannungen und/oder Materialaufwerfungen sein; eine glatte Oberfläche, insbesondere eine glattere Oberfläche als bei einem fachüblichen Düsenkolben aus einem Sintermaterial, aufweisen; eine strukturierte Oberfläche zur Einstellung einer thermischen Ankopplung und/oder eines Reibwiderstandes des Dämpfungsfluides zu der Oberfläche umfassen; eine gegenüber einem Kolbengrundmaterial gehärtete Oberfläche aufweisen und/oder eine Beschichtung umfassen. Zu den Vorteilen und möglichen Ausgestaltungen der in diesem Absatz genannten Merkmale wird auf die entsprechenden Ausführungen zum erfindungsgemäßen Verfahren verwiesen.

Die Ausnehmung kann eine dreidimensionale Form der Düse definieren, wobei die Form zur Einstellung des Strömungswiderstandes und/oder einer Wärmedissipation des Dämpfungsfluides ausgelegt ist. Der Strömungswiderstand kann beispielsweise durch die Fläche und/oder Form eines Strömungsquerschnitts der Düse für das Dämpfungsfluid eingestellt sein.

Die Ausnehmung kann zumindest eine Verbreiterung und/oder eine Verjüngung eines Strömungsquerschnitts für das Dämpfungsfluid umfassen. Durch eine gezielte Anordnung von Verjüngungen und/oder Kurven, an denen das Dämpfungsfluid abgebremst wird, kann beispielsweise die lokale Wärmedissipation eingestellt werden, um beispielsweise die Wärmedissipation über einen möglichst großen Bereich des Düsenkolbens zu verteilen und so eine zu hohe lokale thermische Belastung des Düsenkolbens zu verhindern.

Insbesondere aus Gründen der einfachen und schnellen Herstellbarkeit, kann die Ausnehmung einen im Wesentlichen rechteckigen und/oder trapezförmigen Strömungsquerschnitt für das Dämpfungsfluid umfassen. Durch Ultrakurzpulslasern lassen sich besonders schnell und prozesstechnisch einfach breite und flache Ausnehmungen in den Dämpfungskolben einbringen. Neben einem rechteckigen Strömungsquerschnitt können auch nicht rechtwinklige Geometrien, beispielsweise mit einem Flankenwinkel von 20° bis 30°, und/oder Hinterschneidungen vorteilhaft sein.

Ein Dämpfer umfasst einen Dämpfungsraum zur Aufnahme eines Dämpfungsfluides und einen entlang einer Längsachse des Dämpfungsraumes in dem Dämpfungsraum geführten erfindungsgemäßen Düsenkolben, wobei der Düsenkolben den Dämpfungsraum in eine erste Fluidkammer und eine zweite Fluidkammer unterteilt. Ein durch das erfindungsgemäße Produktionsverfahren hergestellte Dämpfer zeichnet sich gegenüber dem Stand der Technik durch die zusammen mit dem durch das erfindungsgemäße Verfahren hergestellten Düsenkolben beschriebenen Vorteile, insbesondere eine höhere Zuverlässigkeit und Flexibilität bei geringen Herstellungskosten, aus.

Die erfindungsgemäße Produktionsanlage nach Anspruch 4 zur Produktion eines Dämpfers durch ein erfindungsgemäßes Produktionsverfahren umfasst zumindest eine Ultrakurzpulslaserstation zur Bearbeitung eines Kolbenrohlings für den Dämpfer durch Ultrakurzpulslasern. Die Ultrakurzpulslaserstation kann zumindest einen Ultrakurzpulslaser und die zum, insbesondere automatischen, Betrieb des Ultrakurzpulslasers notwendigen Versorgungs- und/oder Steuerungseinrichtungen umfassen. Die Ultrakurzpulslaserstation kann eine Absaugeinrichtung zur Absaugung bei der Ultrakurzpulslaserbearbeitung freigesetzter Stoffe umfassen. Durch eine erfindungsgemäße Produktionsanlage können die bereits mit dem erfindungsgemäßen Produktionsverfahren dargestellten Vorteile umgesetzt werden. Der Dämpfer ist nicht Teil der beanspruchten Erfindung.

Die Ultrakurzpulslaserstation kann einer Mehrzahl von Produktionslinien der Produktionsanlage zuordenbar sein. Unterschiedliche Produktionslinien können beispielsweise unterschiedlich ausgelegte Dämpfer produzieren. Daraus ergibt sich der Vorteil, dass Investitions- und Unterhaltskosten für die Ultrakurzpulslaserstation nur einmalig für die Mehrzahl von Produktionslinien anfallen, wodurch eine kosteneffizientere Produktion ermöglicht wird. Da ein Ultrakurzpulslaser im Gegensatz zu einem Sinterwerkzeug schnell und einfach auf unterschiedliche Bearbeitungsgeometrien eingestellt werden kann, lässt sich eine Zuordnung einer Bearbeitungsstation zu mehreren Produktionslinien besonders vorteilhaft mit einer Laserbearbeitungsstation realisieren.

Die Ultrakurzpulslaserstation kann insbesondere mobil ausgebildet sein, um beispielsweise auf einem, insbesondere motorisierten, Fahrgestell je nach Bedarf zu unterschiedlichen Produktionslinien gefahren zu werden. Alternativ oder ergänzend kann die Produktionsanlage ein Transportsystem zur Zuführung von Kolbenrohlingen aus einer Mehrzahl von Produktionslinien zu der Ultrakurzpulslaserstation umfassen. Das Transportsystem kann beispielsweise ein Förderband und/oder eine Weiche umfassen, um Kolbenrohlinge aus unterschiedlichen Produktionslinien zu der Ultrakurzpulslaserstation zu führen. Darüber hinaus kann das Transportsystem und/oder ein weiteres Transportsystem auch dazu ausgelegt sein, von der Ultrakurzpulslaserstation bearbeitete Düsenkolben einer Weiterverarbeitung zuzuführen.

Die Ultrakurzpulslaserstation kann in ein Transportsystem zum Transport von Kolbenrohlingen integriert sein. Dadurch können die Kolbenrohlinge besonders zeiteffizient während eines Transports durch die Ultrakurzpulslaserstation bearbeitet werden.

Die Ultrakurzpulslaserstation kann einen Laserscanner umfassen. Mit Hilfe eines Laserscanners kann ein Laserstrahl der Ultrakurzpulslaserstation über eine Oberfläche des Kolbenrohlings gerastert werden, sodass die Oberfläche des Kolbenrohlings bearbeitet werden kann, ohne den Kolbenrohling dafür bewegen zu müssen. Es ist also keine, insbesondere mehrachsig, bewegliche Kolbenhalterung zur beweglichen Halterung des Kolbenrohlings während der Ultrakurzpulslaserbearbeitung notwendig. Dadurch kann die Produktionsanlage kostengünstiger aufgebaut und betrieben werden.

Die erfindungsgemäße Produktionsanlage umfasst zumindest eine der Ultrakurzpulslaserstation im Produktionsverlauf vorgeordnete Herstellungsstation zur Herstellung eines Kolbenrohlings aus einem Kolbengrundmaterial.

Durch die Integration der Herstellungsstation können die Herstellung des Kolbenrohlings und seine Ultrakurzlaserbearbeitung vorteilhaft aufeinander abgestimmt werden. Beispielsweise kann der Kolbenrohling bei der Herstellung bereits so weit vorbearbeitet werden, dass die folgende Ultrakurzpulslaserbearbeitung in einer Zeitspanne erfolgen kann, die den Gesamt-Produktionsprozess nicht verlangsamt. Die Herstellungsstation kann fachübliche, insbesondere automatisierte, Maschinen zur Herstellung von Düsenkolben, beispielsweise Drehmaschinen, Fräsmaschinen und/oder Bohrmaschinen umfassen.

Die Produktionsanlage umfasst zumindest eine Steuereinheit zur Steuerung der Ultrakurz- pulslaserstation, und vorzugsweise zur Steuerung einer Herstellungsstation und/oder eines Transportsystems und/oder zur Dokumentation von Produktionsparametern, insbesondere der Ultrakurzpulslaserstation und/oder einer Herstellungsstation, und/oder Prüfungsergebnissen einer Prüfungsstation.

Die Steuereinheit kann beispielsweise ein mit der Ultrakurzpulslaserstation, einer Herstellungsstation und/oder einem Transportsystem kommunikativ verbundenes Computergerät, insbesondere einen Computer und/oder eine speicherprogrammierbare Steuerung, umfassen. Durch die Steuereinheit kann die Produktionsanlage besonders kosten- und zeiteffizient gesteuert werden. Ferner können relevante Produktionsparameter, insbesondere in Verbindung mit Typendaten und/oder Prüfungsergebnissen der produzierten Dämpfer zur Qualitätssicherung dokumentiert werden, um die Zuverlässigkeit der produzierten Dämpfer zu erhöhen.

Die erfindungsgemäße Produktionsanlage umfasst zumindest eine der Ultrakurzpulslaserstation im Produktionsverlauf nachgeordnete Prüfungsstation zur Prüfung des Düsenkolbens und/oder des Dämpfers , wobei die Prüfungsstation eine Sendeeinheit zur Übermittlung von Er- gebnissen der Prüfung an eine Steuereinheit umfasst.

Durch eine in der Produktionsanlage integrierte Prüfungsstation kann besonders schnell kontrolliert werden, ob die produzierten Düsenkolben und/oder Dämpfer ihren jeweiligen Spezifikationen entsprechen. Beispielsweise kann die Kraft-Geschwindigkeits-Charakteristik eines Dämpfers direkt nach seiner Montage überprüft werden. Bei Abweichungen von den Spezifikationen kann die Produktion durch eine Rückkopplung über eine Steuereinheit, beispielsweise an eine Herstellungsstation und/oder die Ultrakurzpulslaserstation, insbesondere auch im laufenden Produktionsprozess, korrigiert werden, sodass nachfolgend produzierte Düsenkolben und/oder Dämpfer ihren Spezifikationen genügen.

Die erfindungsgemäße Produktionsanlage umfasst zumindest eine der Ultrakurzpulslaserstation im Produktionsverlauf nachgeordnete und der Prüfungsstation im Produktionsverlauf vorgeordnete Einbaustation zum Einbau des Düsenkolbens in den Dämpfer.

Die Einbaustation kann einer Prüfungsstation im Produktionsverlauf vor- oder nachgeordnet sein, je nachdem, ob die Prüfung des Düsenkolbens allein oder im Dämpfer eingebaut erfolgen soll. Letzteres hat den Vorteil, dass von der Prüfung auch mögliche Probleme beim Einbau durch von einer Spezifikation abweichende Prüfungsergebnisse mit erfasst werden. Weiterhin entfällt ein zusätzlicher Ein- und Ausbau des Düsenkolbens an einem Prüfungsaufbau und/oder eine zusätzliche Prüfung des fertig montierten Dämpfers. Eine Prüfung des nicht im Dämpfer eingebauten Düsenkolbens ermöglicht dagegen eine einfachere Suche nach der Ursache von von einer Spezifikation abweichenden Prüfungsergebnissen.

Nachfolgend wird die Erfindung anhand von Ausführungsbeispielen beschrieben, die mit Hilfe der Figuren näher erläutert werden.

Es zeigen:
- Fig. 1: eine schematische Darstellung eines erfindungsgemäßen Verfahrens;
- Fig. 2: einen schematischen Längsschnitt eines Kolbenrohlings zur Herstellung eines erfindungsgemäßen Düsenkolbens;
- Fig. 3: einen schematischen Längsschnitt eines erfindungsgemäßen Düsenkolbens;
- Fig. 4: einen schematischen Längsschnitt eines an einer Kolbenstange montierten, erfindungsgemäßen Düsenkolbens und
- Fig. 5: eine schematische Darstellung einer erfindungsgemäßen Produktionsanlage.

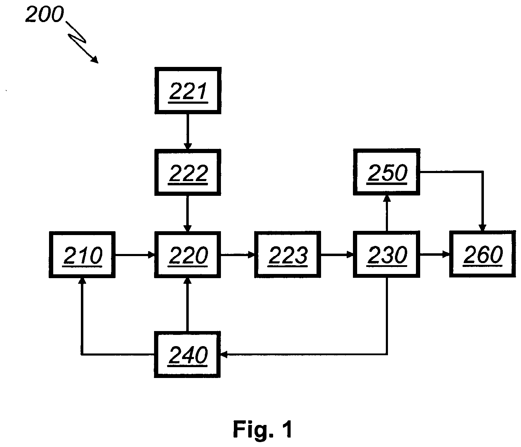

Figur 1 zeigt eine schematische Darstellung eines erfindungsgemäßen Verfahrens 200. Das dargestellte Verfahren 200 umfasst das Herstellen 210 eines Kolbenrohlings, beispielsweise aus einem Vollmaterial und/oder in einem spanenden Verfahren. Danach erfolgt ein Einbringen 220 durch Ultrakurzpulslasern zumindest einer Ausnehmung, die eine Düse definiert, in den Kolbenrohling. Für eine gegebene Kombination aus Kolbenmaterial, Kolbengeometrie und Geometrie und Lage der Ausnehmungen kann einmalig ein Erheben 221 von thermischen Eigenschaften des Düsenkolbens und/oder einer thermischen Ankopplung des Düsenkolbens an eine Umgebung des Düsenkolbens und ein Auswählen 222 von Laserparametern anhand der erhobenen Daten erfolgen. Dadurch können geeignete Laserparameter für das Ultrakurzpulslasern erhalten werden, die einen effizienten Materialabtrag ohne zu große thermische Belastung des Düsenkolbens erlauben. Im Anschluss an das Einbringen 220 der Ausnehmung kann das Anbringen 223 eines die Ausnehmung zumindest einseitig begrenzenden Deckelements erfolgen, sodass das von der Ausnehmung mit dem Deckelement definierte Volumen eine Düse für das Dämpfungsfluid darstellt. Anschließend kann das Prüfen 230 des Düsenkolbens und/oder eines den Düsenkolben enthaltenen Dämpfers, insbesondere bezüglich einer geschwindigkeitsabhängigen Dämpfkraft, erfolgen. Das Verfahren 200 kann ein Steuern 240 des Herstellens 210 und/oder des Einbringens 220, insbesondere unter Nutzung der Ergebnisse des Prüfens 230 in einem geschlossenen Regelkreislauf, umfassen. Das Verfahren 200 kann ferner ein Dokumentieren 250 der Ergebnisse des Prüfens 230, von Verfahrensparametern, von Materialparametern und/oder von Typendaten eines gefertigten Düsenkolbens, beispielsweise durch ein Beschriften 260 des Düsenkolbens und/oder des Dämpfers, umfassen.

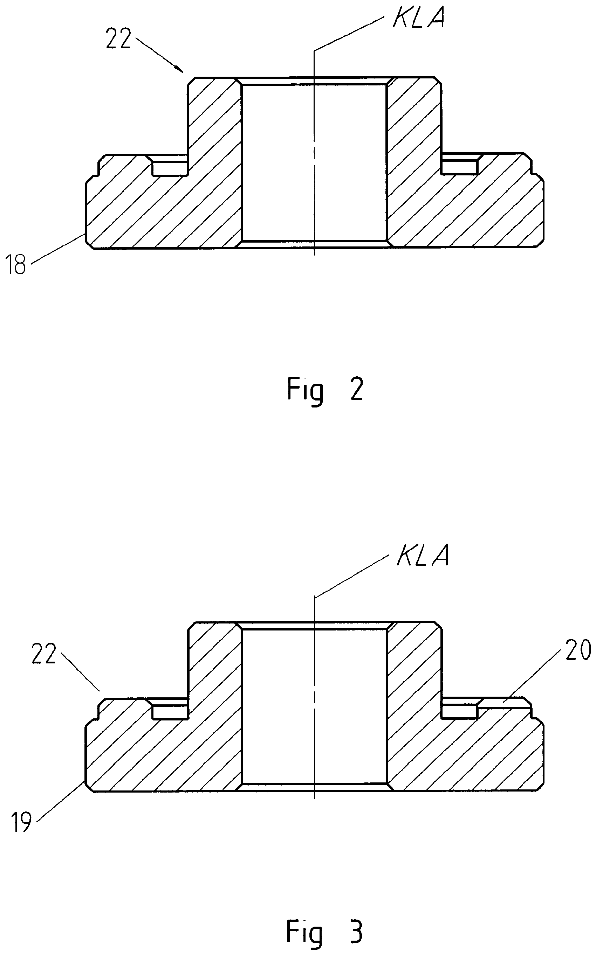

Figur 2 zeigt einen schematischen Längsschnitt eines Kolbenrohlings 18 zur Fertigung eines Düsenkolbens 19. Der Kolbenrohling 18 ist rotationssymmetrisch um eine Kolbenlängsachse KLA geformt und beispielsweise durch Drehen aus einem Vollmaterial hergestellt. An einer Stirnseite weist der dargestellte Kolbenrohling 18 einen umlaufenden Steg 22 in Form eines Zylinderrings auf.

Figur 3 zeigt einen schematischen Längsschnitt eines Düsenkolbens 19. Der Düsenkolben 19 kann beispielsweise durch Einbringen einer Ausnehmung 20 durch Ultrakurzpulslasern aus dem in Figur 2 dargestellten Kolbenrohling 18 gefertigt sein. Die Ausnehmung 20 befindet sich im dargestellten Beispiel in dem umlaufenden Steg 22 und definiert dadurch eine Radialdüse, die von einem Dämpfungsfluid in einer Radialrichtung orthogonal zur Kolbenlängsachse KLA durchströmt werden kann. An einem Düsenkolben 19 ist auch eine Mehrzahl von beispielsweise zwei, drei, vier oder mehr Ausnehmungen 20 denkbar, die insbesondere gleichmäßig um die Kolbenlängsachse KLA verteilt sein können, um eine möglichst gleichmäßige Belastung des Düsenkolbens 19 im Betrieb und somit eine hohe Zuverlässigkeit sicherzustellen.

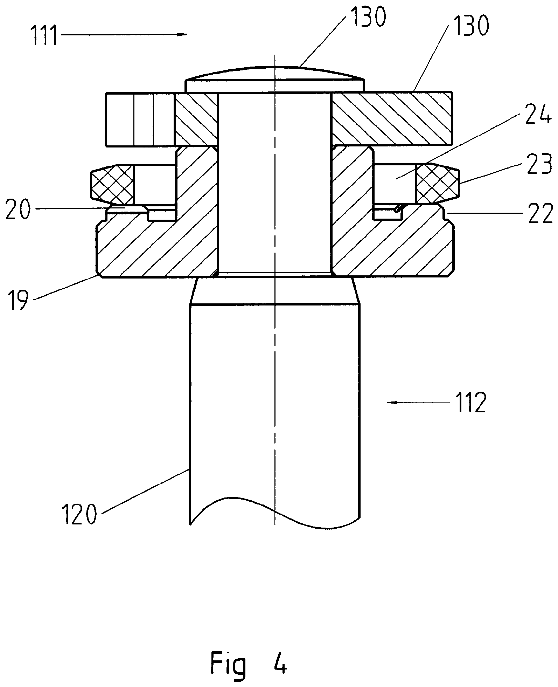

Figur 4 zeigt einen schematischen Längsschnitt eines an einer Kolbenstange 120 montierten, Düsenkolbens 19. Der dargestellte Düsenkolben 19 umfasst ein Deckelement 23, beispielsweise in Form einer Lochscheibe, das so an der Ausnehmung 20 des Düsenkolbens 19 anliegt, dass das Volumen zwischen Düsenkolben 19 und Deckelement 23 im Bereich der Ausnehmung 20 eine Radialdüse für ein Dämpfungsfluid definiert. Im Betrieb ist der Düsenkolbens 19 derart im Dämpfungsraum (nicht dargestellt) eines Dämpfers angeordnet, dass der Düsenkolben 19 den Dämpfungsraum in eine erste Fluidkammer 111 und eine zweite Fluidkammer 112 aufteilt. Dabei kann das in dem Dämpfungsraum enthaltene Dämpfungsfluid beispielsweise von der ersten Fluidkammer 111 durch eine Öffnung 24 des Deckelements 23 zu einer Innenseite des umlaufenden Steges 22 strömen. Von dort kann das Dämpfungsfluid durch die Ausnehmung 20 zu einer Außenseite des umlaufenden Stegs 22 und weiter an dem Düsenkolben 19 vorbei in die zweite Fluidkammer 112 strömen. Auf dem gleichen Weg kann das Dämpfungsfluid auch wieder zurückströmen. Der Düsenkolben 19 und das Deckelement 23 sind mit einer Anzahl von Befestigungselementen 130, beispielsweise zumindest einer Schraube und einer Unterlegscheibe, an der Kolbenstange 120 befestigt. Die Befestigung ist im dargestellten Beispiel so ausgestaltet, dass das Dämpfungsfluid, wenn es von der zweiten Fluidkammer 112 zur ersten Fluidkammer 111 strömt, das Deckelement 23 von dem Düsenkolben 19 abheben kann. Dadurch vergrößert sich ein Strömungsquerschnitt der von der Ausnehmung 20 und dem Deckelement 23 definierten Düse, sodass mögliche Verunreinigungen aus der Düse gespült werden können.

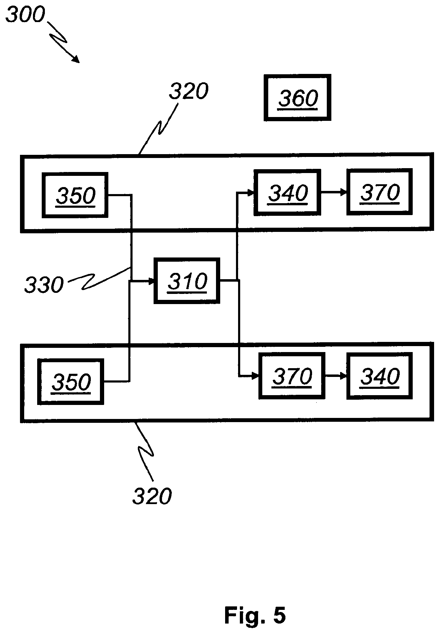

Figur 5 zeigt eine schematische Darstellung einer erfindungsgemäßen Produktionsanlage 300. Die dargestellte Produktionsanlage umfasst zwei Produktionslinien 320, beispielsweise zur Herstellung von in ihrem Dämpfungsverhalten unterschiedlichen Dämpfern. Jede dargestellte Produktionslinie 320 umfasst eine Herstellungsstation 350 zur Herstellung eines Kolbenrohlings. Weiterhin umfasst die Produktionsanlage zumindest ein Transportsystem 330 (durch Pfeile dargestellt und nur exemplarisch beschriftet) zum Transport der Kolbenrohlinge aus beiden Produktionslinien 320 zu einer gemeinsamen Ultrakurzpulslaserstation 310 an der die Kolbenrohlinge durch Ultrakurzpulslasern zu Düsenkolben bearbeitet werden. Das Transportsystem 330 dient weiterhin dazu, die Düsenkolben in ihren jeweiligen Produktionslinien 320 einer Prüfungsstation 340 und einer Einbaustation 370 zum Einbau des Düsenkolbens in einen Dämpfer zuzuführen. Die Einbaustation 370 kann dabei der Prüfungsstation 340 vor- oder nachgeordnet sein, je nachdem, ob die Prüfung des Düsenkolbens im Dämpfer eingebaut erfolgen soll oder nicht. Die dargestellte Produktionsanlage 300 umfasst eine zentrale Steuereinheit 360 zur Steuerung der Produktionsanlage 300.

### Bezugszeichenliste

- 18: Kolbenrohling
- 19: Düsenkolben
- 20: Ausnehmung
- 21: Kolbenbereich
- 22: Steg
- 23: Deckelement
- 111: erste Fluidkammer
- 112: zweite Fluidkammer
- 120: Kolbenstange
- 130: Befestigungselement
- 200: Verfahren
- 210: Herstellen
- 220: Einbringen
- 221: Erheben
- 222: Auswählen
- 223: Anbringen
- 230: Prüfen
- 240: Steuern
- 250: Dokumentieren
- 260: Beschriften
- 300: Produktionsanlage
- 310: Ultrakurzpulslaserstation
- 320: Produktionslinie
- 330: Transportsystem
- 340: Prüfungsstation
- 350: Herstellungsstation
- 360: Steuereinheit
- 370: Einbaustation
- KLA: Kolbenlängsachse

## Patentansprüche

1. Produktionsverfahren für einen Dämpfer mit zumindest folgenden Schritten:
a. Herstellen (210) eines Kolbenrohlings (18) und
b. Einbringen (220) zumindest einer Ausnehmung (20) in den Kolbenrohling (18) durch Ultrakurzpulslasern, wobei die Ausnehmung (20) bei Anordnung des Düsenkolbens (19) in dem Dämpfungsraum eine Düse für das Dämpfungsfluid zur Anpassung des Strömungswiderstands für das Dämpfungsfluid zwischen der ersten Fluidkammer (111) und der zweiten Fluidkammer (112) definiert,
c. Einbauen des Düsenkolbens (19) in einen Dämpfungsraum des Dämpfers, wobei der Düsenkolben (19) entlang einer Längsachse des Dämpfungsraums geführt ist und den Dämpfungsraum in eine erste Fluidkammer (111) und eine zweite Fluidkammer (112) unterteilt,
d. Prüfen (230) des Düsenkolbens (19) bezüglicher einer Kraft-Geschwindigkeits-Charakteristik des den Düsenkolben (19) enthaltenen Dämpfers,
e. Steuern (240) des Einbringens (220) der zumindest einen Ausnehmung (20) anhand eines Ergebnisses des Prüfens (230) eines Düsenkolbens (19).

2. Produktionsverfahren gemäß Anspruch 1,
**dadurch gekennzeichnet, dass**
das Einbringen (220) durch Ultrakurzpulslasern
a. bei einer lokalen Kolbentemperatur in einem Abtragsbereich des Düsenkolbens (19) erfolgt, die oberhalb einer Sublimationstemperatur eines Kolbengrundmaterials liegt;
b. bei einer regionalen Kolbentemperatur in einem an einen Abtragsbereich des Düsenkolbens (19) angrenzenden Kolbenbereich (21) erfolgt, die unterhalb einer Verformungstemperatur eines Kolbengrundmaterials liegt;
c. mit einer Laserwellenlänge im nahen infraroten Spektralbereich zwischen 0,8 µm und 3,0 µm erfolgt;
d. mit einer Pulsfrequenz zwischen 200 kHz und 2000 kHz erfolgt;
e. mit einer Pulsdauer von unter 100 ps erfolgt;
f. mit einer Pulsenergie von unter 500 mJ erfolgt;
g. mit einem Laserspotdurchmesser von zwischen 25 µm und 500 µm erfolgt und/oder
h. in einer kontrollierten Atmosphäre erfolgt.

3. Produktionsverfahren gemäß Anspruch 1 oder 2,
**gekennzeichnet durch**
zumindest einen der folgenden Schritte:
a. Erheben (221) von thermischen Eigenschaften des Düsenkolbens (19) und/oder einer thermischen Ankopplung des Düsenkolbens (19) an eine Umgebung des Düsenkolbens (19);
b. Auswählen (222) von Laserparametern anhand von thermischen Eigenschaften des Düsenkolbens (19) und/oder einer thermischen Ankopplung des Düsenkolbens (19) an eine Umgebung des Düsenkolbens (19);
c. Anbringen (223) zumindest eines an die Ausnehmung (20) angrenzenden Deckelements (23);
d. Dokumentieren (250) eines Ergebnisses eines Prüfens (230) des Düsenkolbens (19) auf dem Düsenkolben (19);
e. Beschriften (260) des Düsenkolbens (19) und/oder des Dämpfers durch Ultrakurzpulslasern;
f. Härten einer Oberfläche des Düsenkolbens (19) durch Ultrakurzpulslasern, und/oder
g. Beschichten einer Oberfläche des Düsenkolbens (19).

4. Produktionsanlage (300) zur Produktion eines Dämpfers mit einem
Produktionsverfahren gemäß einem der Ansprüche 1 bis 3, die Produktionsanlage (300) umfassend
a. zumindest eine Ultrakurzpulslaserstation (310) zur Bearbeitung eines Kolbenrohlings (18) für den Dämpfer durch Ultrakurzpulslasern,
b. zumindest eine der Ultrakurzpulslaserstation (310) im Produktionsverlauf vorgeordnete Herstellungsstation (350) zur Herstellung des Kolbenrohlings (18) aus einem Kolbengrundmaterial,
c. zumindest eine Steuereinheit (360) zur Steuerung der Ultrakurzpulslaserstation (310),
d. zumindest eine der Ultrakurzpulslaserstation (310) im Produktionsverlauf nachgeordnete Prüfungsstation (340) zur Prüfung des Düsenkolbens (19) und des Dämpfers, wobei die Prüfungsstation (340) eine Sendeeinheit (341) zur Übermittlung von Ergebnissen der Prüfung an die Steuereinheit (360) umfasst,
e. zumindest eine der Ultrakurzpulslaserstation (310) im Produktionsverlauf nachgeordnete und der Prüfungsstation (340) im Produktionsverlauf vorgeordnete Einbaustation (370) zum Einbau des Düsenkolbens (19) in den Dämpfer.

5. Produktionsanlage (300) gemäß Anspruch 4,
**dadurch gekennzeichnet, dass**
die Ultrakurzpulslaserstation (310)
a. einer Mehrzahl von Produktionslinien (320) der Produktionsanlage (300) zuordenbar ist, wobei die Ultrakurzpulslaserstation (310) mobil ausgebildet ist und/oder die Produktionsanlage (300) ein Transportsystem (330) zur Zuführung von Kolbenrohlingen (18) aus einer Mehrzahl von Produktionslinien (320) zu der Ultrakurzpulslaserstation (310) umfasst;
b. in ein Transportsystem (330) zum Transport von Kolbenrohlingen (18) integriert ist und/oder
c. einen Laserscanner (311) umfasst.

## Claims

1. A production method for a damper comprising at least the following steps:
a. producing (210) a piston blank (18) and
b. inserting (220) at least one recess (20) into the piston blank (18) by ultrashort pulse lasering, the recess (20) defining a nozzle for the damping fluid for adjusting the flow resistance for the damping fluid between the first fluid chamber (111) and the second fluid chamber (112) when the nozzle piston (19) is arranged in the damping chamber,
c. installing the nozzle piston (19) in a damping chamber of the damper, wherein the nozzle piston (19) is guided along a longitudinal axis of the damping chamber and divides the damping chamber into a first fluid chamber (111) and a second fluid chamber (112),
d. testing (230) the nozzle piston (19) with respect to a force-velocity characteristic of the damper containing the nozzle piston (19),
e. controlling (240) the insertion (220) of the at least one recess (20) based on a result of the test (230) of a nozzle piston (19).

2. The production method according to claim 1,
**characterised in that**
the insertion (220) by ultrashort pulse lasers
a. takes place at a local piston temperature in an ablation region of the nozzle piston (19), which is above a sublimation temperature of a piston base material;
b. at a regional piston temperature in a piston region (21) adjacent to an ablation region of the nozzle piston (19), which is below a deformation temperature of a piston base material;
c. takes place with a laser wavelength in the near infrared spectral range between 0.8 µm and 3.0 µm;
d. takes place with a pulse frequency between 200 kHz and 2000 kHz;
e. takes place with a pulse duration of less than 100 ps;
f. takes place with a pulse energy of less than 500 mJ;
g. takes place with a laser spot diameter of between 25 µm and 500 µm; and/or
h. takes place in a controlled atmosphere.

3. The production process according to claim 1 or 2,
**characterised by**
at least one of the following steps:
a. determining (221) thermal properties of the nozzle piston (19) and/or a thermal coupling of the nozzle piston (19) to an environment of the nozzle piston (19);
b. selecting (222) laser parameters based on thermal properties of the nozzle piston (19) and/or a thermal coupling of the nozzle piston (19) to an environment of the nozzle piston (19);
c. attaching (223) at least one cover element (23) adjacent to the recess (20);
d. documenting (250) a result of a test (230) of the nozzle piston (19) on the nozzle piston (19);
e. marking (260) the nozzle piston (19) and/or the damper by ultrashort pulse lasering;
f. hardening a surface of the nozzle piston (19) by ultrashort pulse lasering, and/or
g. coating a surface of the nozzle piston (19).

4. A production plant (300) for producing a damper with a production method according to any one of claims 1 to 3, the production plant (300) comprising
a. at least one ultrashort pulse laser station (310) for processing a piston blank (18) for the damper by ultrashort pulse lasering,
b. at least one manufacturing station (350) for manufacturing the piston blank (18) from a piston base material, the manufacturing station (350) being arranged upstream of the ultrashort pulse laser station (310) in the production process,
c. at least one control unit (360) for controlling the ultrashort pulse laser station (310),
d. at least one testing station (340) for testing the nozzle piston (19) and the damper, wherein the testing station (340) is arranged downstream of the ultrashort pulse laser station (310) in the production process and comprises a transmission unit (341) for transmitting the results of the test to the control unit (360),
e. at least one installation station (370) for installing the nozzle piston (19) in the damper, the installation station (370) being arranged downstream of the ultrashort pulse laser station (310) in the production process and upstream of the testing station (340) in the production process.

5. The production plant (300) according to claim 4,
**characterised in that**
the ultrashort pulse laser station (310)
a. can be assigned to a plurality of production lines (320) of the production plant (300), the ultrashort pulse laser station (310) being of mobile design and/or the production plant (300) comprising a transport system (330) for feeding piston blanks (18) from a plurality of production lines (320) to the ultrashort pulse laser station (310);
b. is integrated into a transport system (330) for transporting piston blanks (18); and/or
c. comprises a laser scanner (311).

## Revendications

1. Procédé de production d'un amortisseur comprenant au moins les étapes suivantes :
a. fabrication (210) d'une ébauche de piston (18) et
b. insertion (220) d'au moins un évidement (20) dans l'ébauche de piston (18) par laser à impulsions ultracourtes, l'évidement (20) définissant, lorsque le piston à buse (19) est disposé dans l'espace d'amortissement, une buse pour le fluide d'amortissement afin d'adapter la résistance à l'écoulement pour le fluide d'amortissement entre la première chambre à fluide (111) et la deuxième chambre à fluide (112),
c. montage du piston à buse (19) dans une chambre d'amortissement de l'amortisseur, le piston à buse (19) étant guidé le long d'un axe longitudinal de la chambre d'amortissement et divisant la chambre d'amortissement en une première chambre à fluide (111) et une deuxième chambre à fluide (112),
d. contrôle (230) du piston à buse (19) en ce qui concerne une caractéristique force-vitesse de l'amortisseur contenant le piston à buse (19),
e. commande (240) de l'insertion (220) de l'au moins un évidement (20) sur la base d'un résultat du contrôle (230) d'un piston à buse (19).

2. Procédé de production selon la revendication 1,
**caractérisé en ce que**
l'introduction (220) par laser à impulsions ultracourtes
a. s'effectue à une température locale de piston dans une zone d'ablation du piston à buse (19), qui est supérieure à une température de sublimation d'un matériau de base du piston ;
b. s'effectue à une température de piston régionale dans une zone de piston (21) adjacente à une zone d'ablation du piston à buse (19), qui est inférieure à une température de déformation d'un matériau de base du piston ;
c. s'effectue avec une longueur d'onde laser dans le domaine spectral de l'infrarouge proche comprise entre 0,8 µm et 3,0 µm ;
d. s'effectue avec une fréquence d'impulsion comprise entre 200 kHz et 2000 kHz ;
e. s'effectue avec une durée d'impulsion inférieure à 100 ps ;
f. s'effectue avec une énergie d'impulsion inférieure à 500 mJ ;
g. s'effectue avec un diamètre de spot laser compris entre 25 µm et 500 µm et/ou
h. s'effectue dans une atmosphère contrôlée.

3. Procédé de production selon la revendication 1 ou 2,
**caractérisé par**
au moins une des étapes suivantes :
a. détermination (221) des propriétés thermiques du piston à buse (19) et/ou d'un couplage thermique du piston à buse (19) à un environnement du piston à buse (19) ;
b. sélection (222) de paramètres laser sur la base de propriétés thermiques du piston à buse (19) et/ou d'un couplage thermique du piston à buse (19) à un environnement du piston à buse (19) ;
c. mise en place (223) d'au moins un élément de recouvrement (23) adjacent à l'évidement (20);
d. documentation (250) d'un résultat d'un test (230) du piston à buse (19) sur le piston à buse (19) ;
e. marquage (260) du piston à buse (19) et/ou de l'amortisseur par laser à impulsions ultracourtes ;
f. durcissement d'une surface du piston à buse (19) par laser à impulsions ultracourtes, et/ou
g. revêtement d'une surface du piston à buse (19).

4. Installation de production (300) pour la production d'un amortisseur avec un procédé de production selon l'une des revendications 1 à 3, l'installation de production (300) comprenant
a. au moins un poste de laser à impulsions ultracourtes (310) pour le traitement d'une ébauche de piston (18) pour l'amortisseur par laser à impulsions ultracourtes,
b. au moins un poste de fabrication (350) pour la fabrication de l'ébauche de piston (18) à partir d'un matériau de base du piston, le poste de fabrication (350) étant placé en amont du poste de laser à impulsions ultracourtes (310) dans le déroulement de la production,
c. au moins une unité de commande (360) pour commander le poste laser à impulsions ultracourtes (310),
d. au moins un pour tester le piston à buse (19) et l'amortisseur, le poste de test (340) étant disposé en aval du poste de laser à impulsions ultracourtes (310) au cours de la production et comprenant une unité d'transmission (341) pour transmettre les résultats du test à l'unité de commande (360),
e. au moins un poste de montage (370) pour le montage du piston à buse (19) dans l'amortisseur, le poste de montage (370) étant disposé en aval du poste laser à impulsions ultracourtes (310) dans le déroulement de la production et en amont du poste de contrôle (340) dans le déroulement de la production.

5. Installation de production (300) selon la revendication 4,
**caractérisé en ce que**
le poste de laser à impulsions ultracourtes (310)
a. peut être affectée à une pluralité de lignes de production (320) de l'installation de production (300), la station laser à impulsions ultracourtes (310) étant mobile et/ou l'installation de production (300) comprenant un système de transport (330) pour amener des ébauches de piston (18) d'une pluralité de lignes de production (320) au poste de laser à impulsions ultracourtes (310) ;
b. est intégré dans un système de transport (330) pour le transport d'ébauches de pistons (18) et/ou
c. comprend un scanner laser (311).
